Europäisches Patentamt

European Patent Office

Office européen des brevets

(19)

(11) Veröffentlichungsnummer: **0 226 241 B1**

(12) **EUROPÄISCHE PATENTSCHRIFT**

(45) Veröffentlichungstag der Patentschrift: 04.09.91

(51) Int. Cl.⁵: **H04N 5/782, //H04N7/087**

(21) Anmeldenummer: 86202052.6

(22) Anmeldetag: 20.11.86

(54) Schaltungsanordnung zum Auswerten der Videoprogrammsystemdaten in einem Videorecorder.

(30) Priorität: 22.11.85 DE 3541306

(43) Veröffentlichungstag der Anmeldung:
24.06.87 Patentblatt 87/26

(45) Bekanntmachung des Hinweises auf die
Patenterteilung:
04.09.91 Patentblatt 91/36

(84) Benannte Vertragsstaaten:
AT DE FR GB NL

(56) Entgegenhaltungen:
GB-A- 1 568 184

NACHRICHTEN ELEKTRONIK + TELEMATIK,
Band 37, Nr. 5, 7. Mai 1983, Seiten 202-206,
Heidelberg, DE; G. STÄCKER: "Identifikation
von Fernsehprogrammbeiträgen"

(73) Patentinhaber: Philips Patentverwaltung
GmbH
Wendenstrasse 35 Postfach 10 51 49
W-2000 Hamburg 1(DE)
(84) Benannte Vertragsstaaten:
DE

Patentinhaber: N.V. Philips' Gloeilampenfabrieken
Groenewoudseweg 1
NL-5621 BA Eindhoven(NL)
(84) Benannte Vertragsstaaten:
FR GB NL AT

(72) Erfinder: Gebhardt, Arne
Am Damm 386
W-2000 Hamburg 71(DE)
Erfinder: Müller, Günter
Hein-Meyer-Strasse 35
W-2081 Kummerfeld(DE)
Erfinder: Stäcker, Günther
Ginsterweg 1
W-2358 Kaltenkirchen(DE)

(74) Vertreter: Poddig, Dieter, Dipl.-Ing. et al
Philips Patentverwaltung GmbH Wendenstrasse 35 Postfach 10 51 49
W-2000 Hamburg 1(DE)

## Beschreibung

Die Erfindung betrifft eine Schaltungsanordnung für einen Videorecorder mit einer Abtrennschaltung, die nach Empfang eines Freigabesignals die in einem Fernsehsignal enthaltenen mit einem ersten Taktsignal synchronisierten Video-Programm-System-Daten (VPS-Daten) abtrennt und die nach Prüfung der VPS-Daten bei Fehlerfreiheit ein Steuersignal erzeugt, mit einem Umschalter, der in einer ersten Stellung, die zumindest zu Beginn des ersten Halbbildes vorliegt, ein dem ersten Taktsignal synchrones zweites Taktsignal einem Zähler zur Zählung der Impulspausen der Fernsehsynchronimpulse und in einer zweite Stellung die Synchronimpulse dem Zähler zur Zählung der Synchronimpulse zuführt, mit einer die Zählerstellung auswertenden Halbbildkennschaltung, die zu Beginn des ersten Halbbildes ein Kennsignal erzeugt, das den Umschalter aus der ersten in die zweite Stellung setzt und einen die Zählerstellung auswertenden nach Detektion der Datenzeile das Freigabesignal erzeugenden Datenzeilendekoder freigibt, sowie mit einer ein Prüfsignal erzeugenden Auswerteschaltung, die das Prüfsignal bei Auftreten des Kennsignals in einen ersten Zustand und bei Auftreten des Steuersignals in einen zweiten Zustand setzt.

Das Video-Programm-System (VPS) dient zur Steuerung des Aufzeichnungsbetriebes von Videorecordern. In der Zeile I6 eines Fernsehbildes werden vom Sender Daten (VPS-Daten) übertragen, die zur Kennzeichnung einer Sendung dienen. Diese VPS-Daten werden im Videorecorder dekodiert und mit den vom Benutzer eingegebenen und gespeicherten Daten verglichen. Bei Übereinstimmung der Daten wird der Aufzeichnungsbetrieb des Videorecorders gestartet. Eine solche beitragsgesteuerte Aufzeichnung verhindert Fehlaufzeichnungen, die bei Änderung der Programmausstrahlung gegenüber dem angekündigten Zeitablauf (Überziehung, Beitragsaustausch) auftreten.

In der Zeile I6 besteht die Dateninformation aus fünfzehn Worten, die jeweils 8 Bit umfassen. Die Binärinformation wird im Biphase-Code mit einer Datenrate von 2,5 Mbit/s übertragen. Für die VPS-Daten sind die Worte elf bis vierzehn vorgesehen. Nähere Informationen hierzu können den "Rundfunktechnischen Mitteilungen", Jahrgang 29, I985, Heft 4, Seite I bis 9 entnommen werden.

Die eingangs genannte Schaltungsanordnung wird in dem integrierten Schaltkreis SAF 1134 P verwendet. Diese Schaltung dekodiert die VPS-Daten und gibt außerdem ein Prüfsignal ab, das anzeigt, ob ein Fernsehsender VPS-Daten ausstrahlt und ob die Daten fehlerfrei empfangen worden sind. Nachdem der Wechsel vom zweiten zum ersten Halbbild stattgefunden hat, erzeugt die Halbbildkennschaltung ein Kennsignal, durch das das Prüfsignal von der Auswerteschaltung in den ersten Zustand gesetzt wird und angibt, daß keine VPS-Daten zur Verfügung stehen. Liegen nun fehlerfreie VPS-Daten vor, erzeugt die Abtrennschaltung ein Steuersignal, das am Ende der Zeile I6 das Prüfsignal in den zweiten Zustand setzt. Bei fehlerhaften Daten bzw. nicht vorhandenen VPS-Daten bleibt das Prüfsignal im ersten Zustand. Diese Betriebszustände können mit Hilfe einer Leuchtdiode, der das Prüfsignal zugeführt wird, optisch angezeigt werden.

Wird das Fernsehsignal unterbrochen, bleibt das Prüfsignal in dem Zustand, in dem es sich gerade befindet. Auch wenn Störimpulse auftauchen, verändert sich der Zustand des Prüfsignals nicht. Treten z.B. Störimpulse während des zweiten Zustandes des Prüfsignals auf, bleibt das Prüfsignal in diesem Zustand und gibt somit an, daß eine Verarbeitung der VPS-Daten möglich ist, obwohl keine VPS-Daten verarbeitet werden können.

Der Erfindung liegt die Aufgabe zugrunde, eine Schaltungsanordnung der eingangs genannten Art so auszubilden, daß beim Auftreten von Störimpulsen oder beim Wegfall des Fernsehsignals das Prüfsignal einen eindeutigen Zustand annimmt.

Diese Aufgabe wird erfindungsgemäß dadurch gelöst, daß ein die Zählerstellung auswertender Detektor vorgesehen ist, der dann ein Detektionssignal erzeugt, wenn während der zweiten Stellung des Umschalters in einem bestimmten Zeitraum zwischen zwei aufeinanderfolgenden Horizontalimpulsen ein Impuls auftritt oder nach einem bestimmten die Zeilendauer überschreitenden Zeitraum kein Impuls auftritt, und daß die Auswerteschaltung bei Auftreten des Detektionssignals das Prüfsignal in den ersten Zustand setzt.

In der erfindungsgemäßen Schaltungsanordnung werden von dem Detektor die Impulspausen der Fernsehsynchronimpulse durch Auswertung der Zählerstellungen gemessen. Die Synchronimpulse eines Fernsehsignals bestehen aus zwei Impulsfolgen, die jeweils den Anfang eines Halbbildes kennzeichnen und die zwischen einer Folge von Horizontalimpulsen liegen. Die beiden Folgen enthalten zuerst fünf Vor-Ausgleichsimpulse, dann fünf Bildsynchronimpulse und anschließend fünf Nach-Ausgleichsimpulse, wobei die Impulse jeweils mit einer halben Zeile Abstand auftreten. Vor dem Beginn des ersten Halbbildes beträgt der Abstand zwischen dem letzten Horizontalimpuls und den ersten Vor-Ausgleichsimpuls eine halbe Zeile. Der Detektor muß nun die Impulspausen so auswerten, daß die Impulspausen, die während der beiden Impulsfolgen auftreten, nicht als Störimpulse erkannt werden. Es werden also nur dann Störimpulse detektiert, wenn eine Impulspause auftritt, die größer ist als die Impulspause zwischen zwei Bildsynchronimpulsen und kleiner ist als die Impulspause zwischen dem letzten Horizontalimpuls des zweiten Halbbildes und den folgenden Vor-Ausgleichsimpulsen. Tritt nach einem bestimmten Zeitraum, der größer ist als die Impulspause zwischen zwei Horizontalimpulsen, kein Synchronimpuls auf, erzeugt der Detektor ebenfalls das Detektionssignal. Nach Erzeugung des Detektionssignals setzt die Auswerteschaltung das Prüfsignal in den ersten Zustand. Das Prüfsignal nimmt in der erfindungsgemäßen Schaltungsanordnung einen eindeutigen Zustand an, wenn Störimpulse auftauchen oder kein Fernsehsignal vorhanden ist. In der zweiten Stellung des Umschalters ist der Detektor wirkungslos, da beim Auftreten des Kennsignals, das die Halbbildkennschaltung erzeugt, das Prüfsignal in den ersten Zustand geht.

Zur Detektion der Störimpulse ist vorgesehen, daß durch eine Synchronimpulsflanke während der ersten Stellung des Umschalters zuerst die Zählerstellung in ein im Detektor enthaltenes Register eingelesen wird und dann der Zähler in seine Anfangsstellung zurückgesetzt wird. Das Ausgangssignal des Registers wird dann im Detektor ausgewertet und bei einer einem Störimpuls entsprechenden Zählerstellung das Detektionssignal erzeugt. Wenn kein Fernsehsignal vorhanden ist, wird das Detektionssignal erzeugt, wenn eine bestimmte Zählerstellung vorliegt. Hierbei gibt es keine Zwischenspeicherung in einem Register, sondern die Zählerstellung wird direkt ausgewertet.

Damit erneut nach Dekodierung der Datenzeile das Fernsehsignal überprüft werden kann, ist vorgesehen, daß nach Erzeugung des Freigabesignals der Zähler auf seine Anfangsstellung und der Umschalter aus der zweiten in die erste Stellung zurückgesetzt wird.

Die im Videosignal enthaltenden VPS-Daten werden nach der Abtrennung in der Abtrennschaltung einer Speicherschaltung zugeführt. Bei Vorliegen des Freigabesignals und des Steuersignals erzeugt die Auswerteschaltung ein Auslesesignal, das die Daten am Ausgang der Speicherschaltung verfügbar macht.

Um die VPS-Daten z.B. auf einem Oszillographen sichtbar zu machen, wird ein Triggerimpuls von der Schaltungsanordnung erzeugt. Dazu ist vorgesehen, daß die Auswerteschaltung nach Empfang des Freigabesignals das Prüfsignal kurzzeitig in den zweiten Zustand setzt.

Anhand der Zeichnungen wird im folgenden die Erfindung näher erläutert. Es zeigen:

Fig. I ein Ausführungsbeispiel der Erfindung und

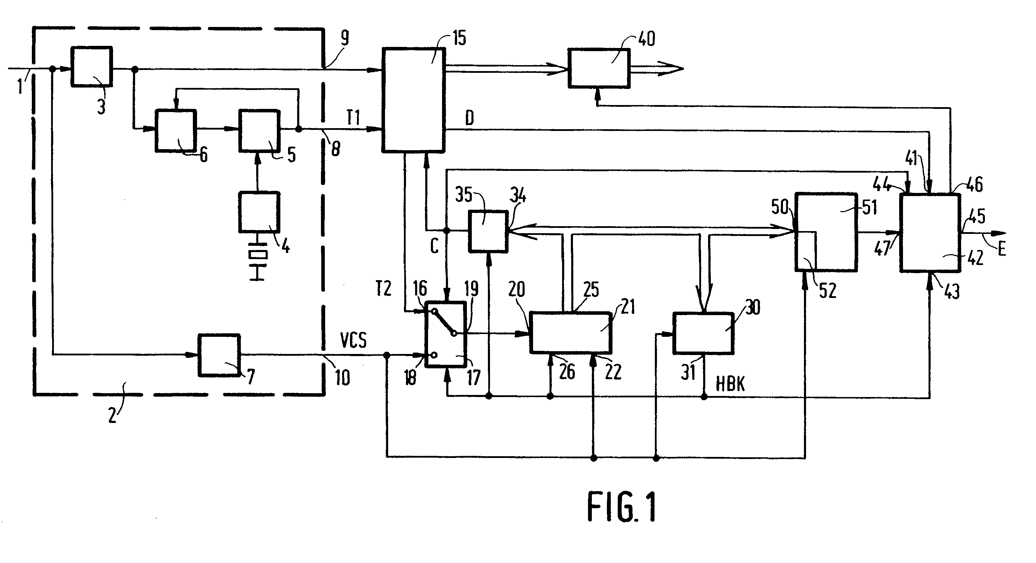

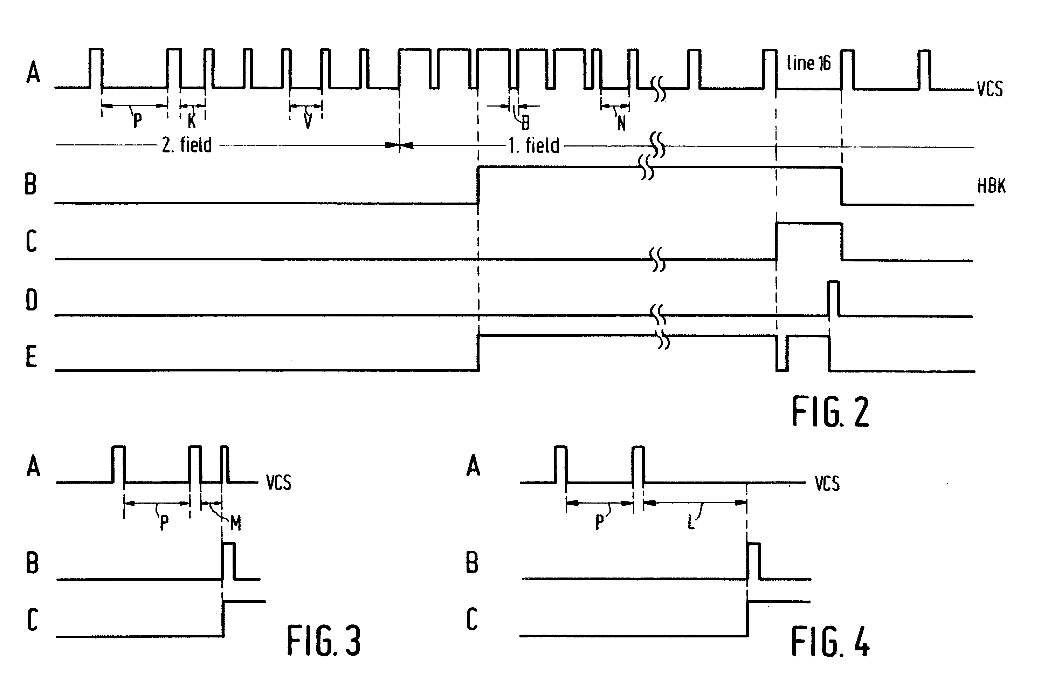

Fig. 2, 3 und 4 Diagramme zur Erläuterung der Fig. I.

In Fig. I wird einem Eingang I eines Datenzeilenprozessors 2 ein Fernsehsignal zugeführt, das die zuvor üblichen, nicht näher dargestellten Signalstufen wie Tuner, Bild-Zwischenfrequenzfilter und -Demodulator durchlaufen hat und in der Zeile I6 die Video-Programm-System-Daten (VPS-Daten) enthält. Der Eingang I des Datenzeilenprozessors 2 ist auch der Eingang einer Schaltung 3, die aus dem Fernsehsignal ein digitales Signal gewinnt, welches die VPS-Daten enthält, und der Eingang einer Synchronabtrennschaltung 7, die aus dem Fernsehsignal die Synchronimpulse VCS abtrennt. Des weiteren umfaßt der Datenzeilenprozessor 2 einen Oszillator 4, dessen quarzstabiles Oszillatorsignal mit einer Frequenz von I0 MHz einem Phasenschieber 5 zugeführt wird. Der andere Eingang des Phasenschiebers 5 ist mit einem Ausgang einer Phasenvergleichsschaltung 6 verbunden, deren erstem Eingang das Ausgangssignal der Schaltung 3 und deren zweitem Eingang das Ausgangssignal des Phasenschiebers 5 zugeleitet wird. Das Ausgangssignal des Phasenschiebers 5 ist ein mit den VPS-Daten synchronisiertes Taktsignal TI, das am Ausgang 8 des Datenzeilenprozessors 2 verfügbar ist. Der Ausgang der Schaltung 3 bildet einen Ausgang 9 und der Ausgang der Synchronabtrennschaltung 7 einen Ausgang I0 des Datenzeilenprozessors 2. Die hier schematisch dargestellte Schaltung des Datenzeilenprozessors 2 ist in einer integrierten Schaltung SAA 5235 realisiert.

Der Ausgang 9 und der Ausgang 8 des Datenzeilenprozessors 2 sind an eine Abtrennschaltung I5 angeschlossen, die aus dem digitalen Signal die VPS-Daten abtrennt und die aus dem Taktsignal TI ein Taktsignal T2 erzeugt, dessen Frequenz 0,5 MHz beträgt. Das Taktsignal T2 wird auf einen Eingang I6 eines Umschalters I7 gegeben, dessen anderem Eingang I8 die Synchronimpulse VCS über den Eingang I0 des Datenzeilenprozessors 2 zugeführt werden. In der ersten Stellung des Umschalters I7 ist der Ausgang I9 mit dem Eingang I6 und in der zweiten Stellung mit dem Eingang I8 verbunden. Das Ausgangssignal des Umschalters I7 wird dem Takteingang 20 eines Zählers 2I zugeführt. Die Synchronimpulse VCS werden einem Freigabe-und Rücksetzeingang 22 des Zählers 2I zugeleitet. Während der ersten Stellung des Umschalters I7 wird der Zähler 2I durch die Rückflanke eines Synchronimpulses freigegeben, um das Taktsignal T2 zu zählen. Der Zählvorgang wird durch eine Vorderflanke eines Synchronimpulses beendet. Mit der Rückflanke des Impulses wird der Zähler auf seine Anfangsstellung zurückgesetzt und ein neuer Zählvorgang gestartet.

Der Ausgang 25 des Zählers 2I ist mit einer Halbbildkennschaltung 30 verbunden, die dann ein Kennsignal HBK erzeugt, wenn der Wechsel zwischen dem zweiten und ersten Halbbild stattgefunden hat. Das Kennsignal HBK ist am Ausgang 3I der Halbbildkennschaltung 30 abnehmbar.

Die Synchronimpulse VCS enthalten zwei Impulsfolgen, die den Wechsel zwischen den beiden Halbbildern kennzeichnen, und Horizontalimpulse. Die Impulsfolgen enthalten jeweils fünf Vor-Ausgleichsimpulse, fünf Bildsynchronimpulse und fünf Nach-Ausgleichsimpulse. In Diagramm A der Fig. 2 ist die Impulsfolge dargestellt, die den Wechsel zwischen dem zweiten und ersten Halbbild kennzeichnet. Die Impulspause V nach einem Vor-Ausgleichsimpuls beträgt 29,65 μs, die Impulspause B nach einem Bildsynchronimpuls 4,7 μs, die Impulspause N nach einem Nach-Ausgleichsimpuls 29,65 μs und die Impulspause P nach einem normalen Horizontalimpuls 59,3 μs. Vor dem Wechsel zwischen zweitem und erstem Halbbild tritt nach dem letzten Horizontalimpuls eine verkürzte Impulspause K von 27,3 μs auf.

Durch die Rückflanke eines Synchronimpulses VCS wird der Zähler 2I zurückgesetzt. Im Zähler 2I werden die Synchronimpulse außerdem kurzzeitig verzögert, um die Messung der Impulspausen zu ermöglichen. Durch die Vorderflanke eines Synchronimpulses VCS wird die Zählerstellung in einem am Eingang der Halbbildkennschaltung 30 liegenden Speicher eingelesen. Die Halbbildkennschaltung 30 wertet die Impulspausen aus und erzeugt nur dann ein Kennsignal HBK, wenn sie die verkürzte Impulspause K nach dem letzten Horizontalimpuls des zweiten Halbbildes und die fünf folgenden Impulspausen V der Vor-Ausgleichsimpulse gemessen hat.

Das Kennsignal HBK, das in Diagramm B der Fig. 2 dargestellt ist, wird dem Umschalter I7 zugeführt und bewirkt, daß dieser in seine zweite Stellung springt. Der Ausgang 3I der Halbbildkennschaltung 30 ist mit einem Rücksetzeingang 26 des Zählers 2I verbunden. Durch das Kennsignal HBK wird der Zähler 2I in seiner Anfangsstellung zurückgesetzt und zur Zählung der Synchronimpulse VCS freigegeben. Durch das Kennsignal HBK wird auch ein Datenzeilendekoder 35 freigegeben, dessen Eingang 34 mit dem Ausgang 25 des Zählers verbunden ist und der die Zählerstellung auswertet. Der Datenzeilendekoder 35 erzeugt ein Freigabesignal C, wenn aus der Zählerstellung der Beginn der Zeile I6 dekodiert worden ist. Das Freigabesignal ist in Diagramm C der Fig. 2 dargestellt und liegt bis zum folgenden Horizontalimpuls vor.

Durch die Rückflanke des Freigabesignals wird der Umschalter I7 in seine erste Stellung zurückgesetzt. In der ersten Stellung bleibt der Umschalter I7 nun solange, bis wieder ein Wechsel zwischen dem zweiten und ersten Halbbild erkannt wird.

Das Freigabesignal C wird auf die Abtrennschaltung I5 gegeben, die während der Dauer dieses Freigabesignals die VPS-Daten vom Videosignal abtrennt. Dabei wird geprüft, ob überhaupt VPS-Daten vorliegen und ob die im Biphase-Code übertragenen VPS-Daten Fehler aufweisen. Die VPS-Daten können z.B. in ein 4 Bit-Schieberegister eingelesen werden und dann an eine Speicherschaltung 40 weitergegeben werden. Ein hier nicht näher dargestelltes Taktsignal, das ebenfalls aus dem Taktsignal TI abgeleitet werden kann, wird der Speicherschaltung 40 zugeleitet.

Liegen VPS-Daten vor und sind keine Biphase-Fehler aufgetreten, erzeugt die Abtrennschaltung I5 ein Steuersignal D, das einem Eingang 4I einer Auswerteschaltung 42 zugeführt wird. Das Steuersignal D ist in Diagramm D der Fig. 2 dargestellt. Einem Eingang 43 der Auswerteschaltung 42 wird das Kennsignal HBK und einem Eingang 44 das Freigabesignal C zugeleitet. Die Auswerteschaltung 42 erzeugt am Ausgang 45 ein Prüfsignal E, das in Abhängigkeit vom Kennsignal HBK und Steuersignal D einen ersten und zweiten Zustand annehmen kann. Durch die Vorderflanke des Kennsignals HBK wird das Prüfsignal E in einen ersten Zustand gesetzt und durch die Vorderflanke des Steuersignals in einen zweiten Zustand. Der zweite Zustand des Prüfsignals zeigt an, daß bei der letzten Datenzeile, d.h. der Zeile I6, gültige VPS-Daten vorgelegen haben. Das in Diagramm E der Fig. 2 gezeigte Prüfsignal kann z.B. auch eine Leuchtdiode steuern, die den jeweiligen Zustand optisch anzeigt.

Die Auswerteschaltung 42 gibt am Ausgang 46 auch ein Auslesesignal ab, wenn das Freigabesignal C beendet ist und das Steuersignal D auftritt. Das Auslesesignal gibt den Ausgang der Speicherschaltung 40 frei und ermöglicht somit die Auslesung dieser Daten.

Der Ausgang 25 des Zählers 2I ist noch mit einem Eingang 50 eines Detektors 5I verbunden. Der Detektor 5I erzeugt ein Detektionssignal, wenn Störimpulse im Fernsehsignal auftauchen oder wenn kein Fernsehsignal vorhanden ist. Das Detektionssignal wird einem Eingang 47 der Auswerteschaltung 42 zugeführt und bewirkt, daß das Prüfsignal E in den ersten Zustand geht.

Am Eingang 50 des Detektors 5I liegt ein Register 52, in das die letzte Zählerstellung nach Auftreten eines Synchronimpulses bzw. Störimpulses eingelesen wird. Der Detektor 5I entscheidet in Abhängigkeit von der Impulspause, ob ein Störimpuls vorliegt. Da die Impulspause B nach einem Bildsynchronimpuls 4,7 μs und die Impulspause K nach dem letzten Horizontalimpuls des zweiten Halbbildes 27,3 μs beträgt, gibt der Detektor 5I nur dann ein Detektionssignal ab, wenn eine Impulspause aufgetreten ist, die größer als 4,7 μs und kleiner als 27,3 μs ist. In Fig. 3 ist der Fall dargestellt, daß ein Störimpuls nach einem Horizontalimpuls auftritt. In Diagramm A folgt auf zwei Horizontalimpulse ein Störimpuls. Die Impulspause M vom letzten Horizontalimpuls zum Störimpuls beträgt z.B. I5 μs. Der Detektor 5I erzeugt dann, wie Diagramm B zeigt, ein Detektionssignal, das das Prüfsignal E vom ersten in den zweiten Zustand setzt (Diagramm C).

In Fig. 4 ist der Fall dargestellt, daß kein Fernsehsignal vorliegt, d.h. wenn das Fernsehsignal unterbrochen wird. Diagramm A der Fig. 4 zeigt, daß nach zwei Horizontalimpulsen kein weiterer Impuls folgt. Der Detektor vergleicht die Zählerstellung mit einem gespeicherten Wert und gibt dann ein Detektionssignal ab, wenn dieser Wert einem Zeitraum L entspricht, der größer als die Impulspause P ist (Diagramm B der Fig. 4). Das Detektionssignal bewirkt nun, daß das Prüfsignal E von dem zweiten in den ersten Zustand gesetzt wird, wie das auch Diagramm C der Fig. 4 zeigt.

Um die VPS-Daten auf einem Oszillographen sichtbar zu machen, kann in das Prüfsignal E ein Triggerimpuls eingefügt werden. Die Auswerteschaltung setzt daher nach Erzeugung des Freigabesignals C das Prüfsignal E kurzzeitig vom ersten in den zweiten Zustand, wie das auch in Diagramm E der Fig. 2 gezeigt ist.

**Patentansprüche**

1. Schaltungsanordnung für einen Videorecorder mit einer Abtrennschaltung (l5), die nach Empfang eines Freigabesignals die in einem Fernsehsignal enthaltenden mit einem ersten Taktsignal (Tl) synchronisierten Video-Programm-System-Daten (VPS-Daten) abtrennt und die nach Prüfung der VPS-Daten bei Fehlerfreiheit ein Steuersignal erzeugt, mit einem Umschalter (l7), der in einer ersten Stellung, die zumindest zu Beginn des ersten Halbbildes vorliegt, ein dem ersten Taktsignal (Tl) synchrones zweites Taktsignal (T2) einem Zähler (2l) zur Zählung der Impulspausen der Fernsehsynchronimpulse und in einer zweiten Stellung die Synchronimpulse dem Zähler (2l) zur Zählung der Synchronimpulse zuführt, mit einer die Zählerstellung auswertenden Halbbildkennschaltung (30), die zu Beginn des ersten Halbbildes ein Kennsignal erzeugt, das den Umschalter (l7) aus der ersten in die zweite Stellung setzt und einen die Zählerstellung auswertenden nach Detektion der Datenzeile das Freigabesignal erzeugenden Datenzeilendekoder (35) freigibt, sowie mit einer ein Prüfsignal erzeugenden Auswerteschaltung (42), die das Prüfsignal bei Auftreten des Kennsignals in einen ersten Zustand und bei Auftreten des Steuersignals in einen zweiten Zustand setzt, dadurch gekennzeichnet, daß ein die Zählerstellung auswertender Detektor (5l) vorgesehen ist, der dann ein Detektionssignal erzeugt, wenn während der zweiten Stellung des Umschalters (l7) in einem bestimmten Zeitraum zwischen zwei aufeinanderfolgenden Horizontalimpulsen ein Impuls auftritt oder nach einem bestimmten die Zeilendauer überschreitenden Zeitraum kein Impuls auftritt, und daß die Auswerteschaltung (42) bei Auftreten des Detektionssignals das Prüfsignal in den ersten Zustand setzt.

2. Schaltungsanordnung für einen Videorecorder nach Anspruch l, dadurch gekennzeichnet, daß durch eine Synchronimpulsflanke während der ersten Stellung des Umschalters (l7) zuerst die Zählerstellung in ein im Detektor (5l) enthaltendes Register (52) eingelesen wird und dann der Zähler (2l) in seine Anfangsstellung zurückgesetzt wird.

3. Schaltungsanordnung für einen Videorecorder nach einem der vorhergehenden Ansprüche, dadurch gekennzeichnet, daß nach Erzeugung des Freigabesignals der Zähler (2l) auf seine Anfangsstellung und der Umschalter (l7) aus der zweiten in die erste Stellung zurückgesetzt wird.

4. Schaltungsanordnung nach einem der vorhergehenden Ansprüche, dadurch gekennzeichnet, daß die Abtrennschaltung (l5) die abgetrennten VPS-Daten einer Speicherschaltung (40) zuführt und daß die Auswerteschaltung (42) bei Vorliegen des Freigabesignals und des Steuersignals ein Auslesesignal erzeugt, das die Daten am Ausgang der Speicherschaltung (40) verfügbar macht.

5. Schaltungsanordnung nach einem der vorhergehenden Ansprüche, dadurch gekennzeichnet, daß die Auswerteschaltung (42) nach Empfang des Freigabesignals das Prüfsignal kurzzeitig in den zweiten Zustand setzt.

**Claims**

1. A circuit arrangement for a video recorder, with a separation circuit (15) which after reception of an enable signal extracts the video programme system data (VPS data) contained in a television signal and synchronised with a first clock signal (T1), and which generates a control signal in the absence of errors after checking of the VPS data, with a switch (17) which, in a first position obtained at the least at the beginning of the first field, supplies a second clock signal (T2), which is synchronous with the first clock signal (T1), to a counter (21) to count the pulse intervals of the television synchronisation pulses and, in a second position, supplies the synchronisation pulses to the counter (21) to count the synchronisation pulses, with a field identification circuit (30) which evaluates the count and at the beginning of the first field generates an identification signal which sets the switch (17) from the first to the second position and, after detection of the data line, enables the data line decoder (35), which evaluates the count and generates the enable signal, and with an evaluation circuit (42) which generates a test signal and sets the test signal to a first state when the identification signal appears and to a second state when the control signal appears,
characterised in that there is provided a detector (51) which evaluates the count and which generates a detection signal when in the second position of the switch (17) a pulse occurs in a given time interval between two successive horizontal pulses or no pulse occurs after a given time interval longer than the line duration, and in that the evaluation circuit (42) sets the test signal to the first state when a detection signal appears.

2. A circuit arrangement for a video recorder as claimed in Claim 1, characterised in that upon a synchronisation pulse edge in the first position of the switch (17) the count is read into a register (52) provided in the detector (51), and subsequently the counter (21) is reset to its initial count.

3. A circuit arrangement for a video recorder as claimed in one of the preceding Claims, characterised in that the counter (21) is reset to its initial count and the switch (17) is reset from the second to the first position after generation of the enable signal.

4. A circuit arrangement as claims in any one of the preceding claims, characterised in that the separation circuit (15) supplies the extracted VPS data to a memory circuit (40), and in that the evaluation circuit (42) generates a read-out signal to make the data available on the output of the memory circuit (40) when the enable signal and the control signal are present.

5. A circuit arrangement as claimed in any one of the preceding claims, characterised in that after reception of the enable signal the evaluation circuit (42) sets the test signal briefly to the second state.

**Revendications**

1. Circuit destiné à un magnétoscope et comportant un circuit séparateur (15) qui, après la réception d'un signal de libération, sépare des données de système de programmation vidéo (dites données VPS) contenues dans un signal de télévision et synchronisées par un premier signal d'horloge (T1) et qui, après le contrôle des données VPS engendre un signal de commande en l'absence d'erreurs, un commutateur (17) qui, dans une première position au moins présente au début de la première trame, envoie un second signal d'horloge (T2) synchrone avec le premier signal d'horloge (T1) vers un compteur (21) pour compter les intervalles des impulsions de synchronisation de télévision et, dans une seconde position, envoie les impulsions de synchronisation vers le compteur (21) pour compter les impulsions de synchronisation, un circuit d'identification de trame (30) évaluant la position de comptage du compteur et engendrant, au début de la première trame, un signal d'identification qui amène le commutateur (17) à partir de la première position dans la seconde position, et un décodeur de lignes de données (35) évaluant la position de comptage du compteur et engendrant le signal de libération après la détection de la ligne de données, ainsi qu'un circuit évaluateur (42) engendrant un signal de contrôle qui, lors de l'apparition du signal d'identification, amène le signal de contrôle dans un premier état et, lors de l'apparition du signal de commande, amène ce signal dans un second état, caractérisé en ce qu'il est prévu un détecteur (51) évaluant la position de comptage du compteur et engendrant alors un signal de détection si, en présence de la seconde position du commutateur (17), une impulsion apparaît dans un intervalle de temps déterminé compris entre deux impulsions horizontales successives ou qu'aucune impulsion n'apparaît après un intervalle de temps déterminé d'une durée supérieure à la durée de trame, et en ce que le circuit évaluateur (42) amène le signal de contrôle dans le premier état lors de l'apparition du signal de détection.

2. Circuit selon la revendication 1, destiné à un magnétoscope, caractérisé en ce qu'il est prévu qu'un flanc d'impulsion de synchronisation, apparaissant dans la première position du commutateur (17), a pour effet d'introduire d'abord la position de comptage du compteur dans un registre (52) contenu dans le détecteur (51) et, ensuite, de remettre le compteur (21) dans sa position initiale.

3. Circuit selon l'une quelconque des revendications précédentes, destiné à un magnétoscope, caractérisé en ce que, après la génération du signal de libération, le compteur (21) est ramené dans sa position initiale et le commutateur (17) est ramené à partir de la seconde position dans la première position.

4. Circuit selon l'une des revendications précédentes, caractérisé en ce que le circuit séparateur 15) envoie les données VPS séparées vers un circuit de mémorisation (40) et en ce que le circuit d'évaluation (42), en présence du signal de libération et du signal de commande, engendre un signal de lecture qui fait en sorte que les données soient disponibles sur la sortie du circuit de mémorisation (40).

5. Circuit selon l'une des revendications précédentes, caractérisé en ce que le circuit d'évaluation (42), après la réception du signal de libération, amène le signal de contrôle momentanément dans le second état.

FIG.1

EP 0 226 241 B1

FIG. 2

FIG. 3

FIG. 4

EP 0 226 241 B1